# EUROPEAN PATENT SPECIFICATION

(11) **EP 3 811 806 B1**
(45) Date of publication and mention of the grant of the patent: **07.09.2022**
(21) Application number: 20203164.7
(22) Date of filing: 21.10.2020
(51) Int. Cl.: A41D 19/00, A41D 19/015, A41D 27/24, B32B 3/08, B32B 3/26, B32B 5/02, B32B 5/26, B32B 7/09, B32B 7/12, B32B 9/04, B32B 27/12, B32B 27/34, B32B 9/02

(54) **GLOVE**
HANDSCHUH
GANT

(30) Priority: 21.10.2019 GB 201915216; 16.01.2020 GB 202000690
(43) Date of publication of application: 28.04.2021
(73) Proprietor: Griffiths, Joseph Anthony, Aldershot, Hampshire GU12 4UH (GB)
(72) Inventor: Griffiths, Joseph Anthony, Aldershot, Hampshire GU12 4UH (GB)
(74) Representative: Brown, Alexander Edward

(56) References cited:
- US-A1- 2018 303 175
- US-A1- 2019 166 933

## Description

### Field of Invention

The present invention relates to a glove and a method of assembling a glove.

### Background

PPE (Personal Protective Equipment) requirements can include wearing protective gloves. Protective gloves which combine a number of different properties tend to include many layers, which can reduce the touch sensitivity of a user's hands when wearing the gloves.

Many modern control systems, communication devices and tablets include touch screens. Furthermore, in some industries there is a requirement that controls, such as switches or knobs, need to be identifiable and operable by touch alone as they may be out of sight of a user. One example is in the case of pilots, including military pilots, where some of the controls may be located out of sight of the pilot when seated. A further example is if the area in which the controls are located has poor lighting. In these, and many other scenarios, a wearer of the protective gloves must still be able to actuate a touch screen and/or feel controls which may be out of sight.

US 2019/166933 discloses an illuminated glove for illuminating a wearer's path in low ambient light. The glove 10 includes a hand portion, finger portions and a thumb portion, and light sources. The glove may cover a portion of a wearer's fingers/thumb or may comprise a fully cover a wearer's fingers, and the distal ends of the finger/thumb portions may be constructed of a conductive material for operation of a touch screen.

US 2018/303175 discloses a glove for police or military that protects a user's hand while facilitating dexterity during activities such as firing a gun or operating a touch screen. A conductive tab may be provided on the finger or thumb for use in operating a touch screen.

It is an aim of the present invention to provide a glove which addresses one or more of the disadvantages associated with the prior art.

### Summary

According to the invention there is provided a glove made of a first material, wherein a portion of the first material is absent in a region of at least one digit of the glove to define an aperture and at least a part of the aperture is disposed towards a tip of the at least one digit of the glove; and a portion of a second material is attached to the first material to cover the aperture; wherein the second material is compatible for use with a touch screen.

The portion of second material may be substantially U shaped in cross section, and may have a radius R and a height H.

The height H may be greater than the radius R.

The portion of second material extends over between 50% and 90% of the circumference of the digit of the glove.

A seam between the first material and the second material may be disposed towards an external side of the glove.

The portion of second material may extend over more than one digit.

The portion of second material may have a thickness of 0.02mm to 0.8mm.

The portion of second material may comprise a cuff disposed on the edge away from the tip of the digit, the cuff may be a greater thickness than the rest of the portion of second material.

The portion of second material may be attached to the first material by stitching the two together.

The portion of second material may include a flange protruding outwardly from a circumference of the portion of second material.

The portion of second material may include a flange protruding inwardly from a circumference of the portion of second material.

The portion of second material may include a flange protruding both inwardly and outwardly from a circumference of the portion of second material.

The first material may be attached to the flange of the portion of second material.

The second material may comprise an elastomer.

The second material may comprise a chemical and biological protective material, which may be suitable for military use.

The first material may comprise a chemical and biological protective material, which may be suitable for military use.

The glove of the first material may comprise an inner glove, and may further comprise an outer glove made of a third material surrounding the inner glove, wherein a portion of the third material may be absent in a region of the same at least one digit of the inner glove.

The glove of the first material may comprise an outer glove, and may further comprise an inner glove made of a third material, wherein the outer glove may surround the inner glove.

A portion of the third material may be absent in a region of the same at least one digit of the outer glove. Alternatively the inner glove may not comprise an aperture.

The portion of second material may be attached to both the first material and the third material.

The third material may comprise a material with fire retardant properties, for example, Nomex (RTM).

The glove may comprise a mitten which may comprise one finger digit and one thumb digit.

The glove may comprise a thumb digit and a plurality of finger digits.

The portion of second material may be disposed on one or more finger digits and the thumb digit.

The portion of second material may be disposed on the index finger digit and the thumb digit.

When worn by a wearer, the portion of second material may be the only material between the wearer's finger and/or thumb received within the at least one digit, and the external environment.

The portion of second material may extend around the circumference of the at least one digit to the level of a wearer's fingernail.

The second material may comprise an elastomer base which may comprise a conductive filler. The conductive filler may be a non-metallic filler. The conductive filler may be a metallic filler.

The second material may comprise a hardness of between 50 and 80 on the Shore A hardness scale.

There is provided a method of assembling a glove which may comprise: providing a glove with a portion of the first material absent in a region of the at least one digit of the glove to define the aperture; and stitching the portion of second material to attach it to the first material to cover the aperture.

Wherein the glove of the first material comprises an inner glove, the method may further comprise: providing an outer glove with a portion of the third material absent in the region of the at least one digit of the glove to define the aperture; and stitching the portion of second material to attach it to the third material to cover the aperture in the outer glove.

Wherein the glove of the first material comprises an outer glove, the method may further comprise: providing an inner glove comprising a third material; and stitching the inner glove to an inside of the outer glove.

Any embodiments described herein may comprise a portion of second material on one or more digits. It can be appreciated therefore that the embodiment may also comprise one or more portions and/or apertures and can be described with reference to one or more fingers.

Where reference is made to a particular digit, for example the thumb, index finger, middle finger, ring finger and little finger, it can also be appreciated that the same description could apply to any other of said digits.

Where reference is made to stitching, a number of alternative attachment means could also be used. Such alternatives could be, for example but not limited to, an adhesive, resin, by moulding the materials together, soldering or any other known mechanical, chemical or other suitable attachment means.

### Brief Description of the Drawings

Embodiments of the invention will now be described by way of example only, with reference to the accompanying drawings in which:
**Figure 1** shows a diagrammatic plan view of a palm side of a glove of a first material according to a first embodiment, including a touch screen compatible insert of a second material;
**Figure 2** shows a schematic cross-sectional view of a digit of the glove of Figure 1 looking in a direction Z₁ showing the touch screen compatible insert extending over more than 50% of the circumference of the digit;
**Figure 3** shows a cross-sectional view of the insert cut through line X-X of Figure 1;
**Figure 4** shows a cross-sectional view of the insert cut through line Y-Y of Figure 1;
**Figure 5** shows a plan view of the insert in a direction Z₂ shown in Figure 3;
**Figure 6** shows a perspective view of the insert of Figure 3;
**Figure 7** shows a schematic cross-sectional view of a glove according to a second embodiment comprising an outer glove, an inner glove and a touch screen compatible insert, which is stitched twice, first to the inner glove and secondly to the outer glove;
**Figure 8** shows a cross-sectional view of an insert of a third embodiment cut through line X-X of Figure 1;
**Figure 9** shows a cross-sectional view of an insert of a third embodiment cut through line Y-Y of Figure 1;
**Figure 10** shows a plan view of an insert of a third embodiment in a direction Z₃ shown in Figure 8;
**Figure 11** shows a perspective view of the insert of Figure 8;
**Figure 12** shows a diagrammatic view of a palm side of a glove according to a fourth embodiment comprising a touch screen compatible portion on only one digit of the glove;
**Figure 13** shows a diagrammatic view of a palm side of a glove according to a fifth embodiment comprising a touch screen compatible portion which extends over more than one digit of the glove;
**Figure 14** shows a diagrammatic view of a palm side of a glove according to a sixth embodiment comprising a touch screen compatible portion which extends 100% of the circumference of the digit;
**Figure 15** shows a diagrammatic perspective view of a glove according to a seventh embodiment comprising a touch screen compatible portion along edges of the digits.
**Figure 16** shows a cross-sectional view of an insert of an eighth embodiment cut through line X-X of Figure 1
**Figure 17** shows a cross-sectional view of an insert of an eighth embodiment cut through line Y-Y of Figure 1
**Figure 18** shows a plan view of an insert of an eighth embodiment in a direction Z₄ shown in Figure 16;
**Figure 19** shows a perspective view of the insert of Figure 16;
**Figure 20** shows a cross-sectional view of an insert of a ninth embodiment cut through line X-X of Figure 1.

### Detailed Description

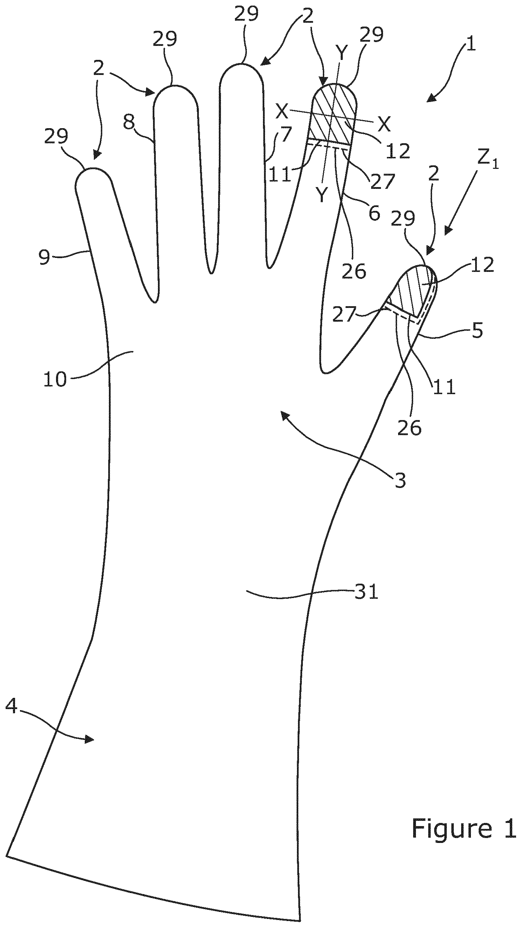

A glove 1 according to a first embodiment is described herein with reference to Figures 1 to 6.

Protective gloves can be used for many different purposes, for example some have flame retardant properties, some protect against chemical and biological agents, others are hard wearing and include layers or patches of reinforcement material. Protective gloves which combine a number of different properties tend to include many layers, which can reduce the touch sensitivity of a wearer's hands when wearing the gloves.

Protective gloves are often worn as part of a wearer's PPE (Personal Protective Equipment). One application where the PPE needs to be resistant to chemical and biological agents is referred to as CBRN (Chemical Biological Radiological Nuclear), formerly NBC (Nuclear Biological Chemical).

Many modern control systems, communication devices and tablets include touch screens. Any protective gloves worn may require a further layer to ensure a wearer is capable of actuating a touch screen whilst wearing the gloves.

In some applications there is a requirement that controls, such as switches or knobs, need to be touched and felt to know what they are, as they are out of sight of a wearer. One example is in the case of a pilot, where some of the controls are located behind or otherwise around a seat of an aircraft and not readily visible in normal use. A further example is if the area in which the controls are located has poor lighting or if it is dark.

With reference to Figure 1, there is a glove 1 particularly but not exclusively for use as a military flying glove.

The glove 1 comprises five digits 2, one for each of the thumb 5, index finger 6, middle finger 7, ring finger 8 and little finger 9. The digits 2, are connected by a body 3 extending over the palm of a wearer, and a sleeve 4 extending over a portion of a wearer's forearm and wrist. At the extremities of each digit 2, is a tip 29.

The glove 1 is made of a first material 10, wherein a portion of the first material 10 is absent in a region of the thumb digit 5 and index finger digit 6 of the glove 1 to define an aperture 11. Each aperture 11 is closed by a portion of second material 12 attached to the first material 10 by stitching 27 along an edge of the portion of second material 12. For ease of description, the portion of second material 12 is herein called an insert 12, it being understood that these terms may be used interchangeably herein.

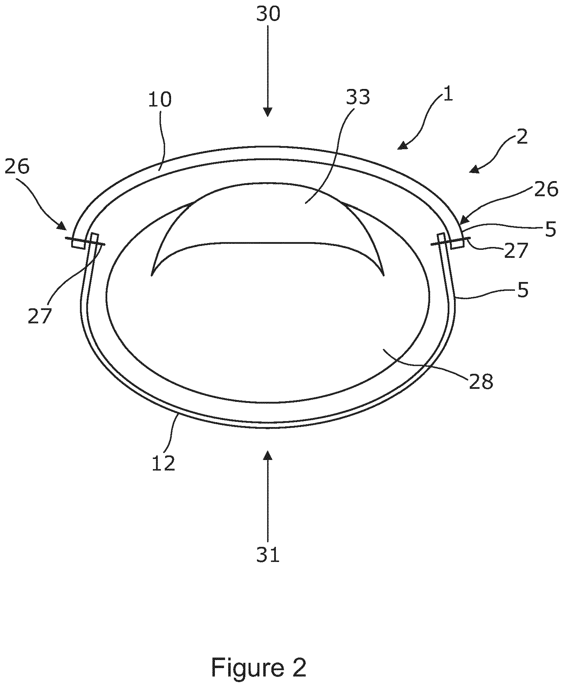

With reference to Figure 2, the thumb 28 of the wearer is shown inside the glove 1, specifically inside the thumb digit 5. The tip 29 has been cut away for ease of reference, so that the glove 1 can be seen in cross-section and the thumb 28 is exposed. The glove 1, comprises a palm side 31 which is the side which is towards the palm of a wearer's hand, and an external side 30 which is the side towards the wearer's fingernails or back of their hand. As illustrated in Figure 2 the insert 12, extends more than 50% of the circumference of the thumb 28. This is described in more detail below. As illustrated in Figure 2, the insert 12 may extend around the circumference of the at least one digit to the level of a wearer's fingernail 33.

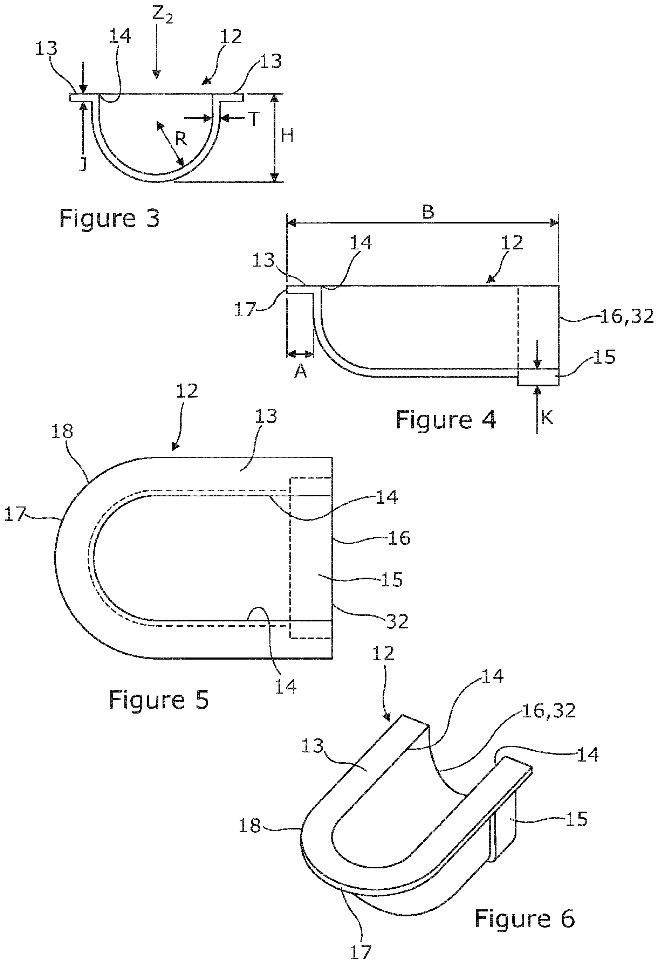

With reference to Figures 3 to 6, the insert 12 is made from the second material which is touch screen compatible and enables the wearer of the glove 1 to operate a touch screen. Preferably the second material is an elastomer, however other known touch screen compatible materials can be envisaged. The elastomer is relatively thin as described below configured such that a wearer's sensitivity of touch is improved at the insert 12. In addition, in some embodiments the wearer's digit directly contacts the inside of the insert 12, and the material of the insert comprises the outermost layer of the glove 1 such that the glove comprises a single layer of material in that region of the glove 1, so as to optimise the touch sensitivity for the wearer. This enables a wearer to better feel controls which are out of sight when wearing the gloves 1.

Preferably the elastomer is elastically deformable. In some embodiments the elastomer is gas impermeable such that any toxins in the external environment cannot penetrate the elastomer.

The second material is chosen based on requirements of touch screen compatibility, chemical resistance or structural integrity for the intended application of the glove 1, and the flexibility and tactility to improve a wearer's sensitivity to touch when wearing the glove 1. The stiction properties of the material also need to be considered to ensure that the insert 12 is suitable for sliding across a touch screen. For example some rubbers do not have suitable stiction properties, meaning that rather than the insert 12 sliding across the touch screen, the friction between the insert 12 and the touchscreen prevents a smooth relative movement between the two, or any sliding at all.

In some embodiments the second material is an elastomer comprising a conductive filler. In some embodiments, particularly those which require the glove 1 to be CBRN protective, the second material can be a butyl based elastomer comprising a conductive filler, preferably the butyl based elastomer is chlorobutyl. The filler can be metallic or non-metallic. In some embodiments the filler is a carbon black filler, a nano black filler or a combination of both. The filler can be in any form, for example in the form of powder, particles or fibres. Carbon black filler typically provides good conductive properties, whilst the nano black filler typically provides good structural properties.

A non-metallic filler is preferred for the manufacture of the glove 1 as a metallic filler was found to be more wearing on the manufacturing tooling than a non-metallic filler. Typically to include a metallic filler instead of a non-metallic filler also increased the overall cost of manufacturing the glove 1.

A butyl base polymer such as chlorobutyl is one example of a good material selection for the second material because it has properties of low gas permeability and high chemical resistance. It also typically has good adhesion and compatibility to other elastomers. It also has an improved state of cure in comparison to standard butyl rubber.

Some example properties of the second material will now be described. The second material preferably has a hardness of between 50 and 80 on the Shore A hardness scale, and more preferably a hardness of between 60 and 65 on the Shore A hardness scale. In terms of conductivity, the second material comprises a resistance below 50Ω, preferably below 20Ω and more preferably below 15Ω. In some embodiments the second material comprises a resistance above 3Ω.

If too much filler is used then the hardness can increase, if the hardness is too high then the flexibility of the second material is not suitable to allow the required touch sensitivity for the wearer. If not enough filler is used then the second material does not have sufficient conductivity to operate the touch screen. The amount of filler used is dependent on the overall hardness and conductivity requirements described above.

As illustrated in Figure 3, the insert 12 is substantially U-shaped in cross-section. The U-shape can be considered part of a circumference of the insert. The insert 12 has a radius R, a height H and a thickness T. The height H is greater than the radius R, such that the insert 12 extends over more than 50% of the circumference of the digit 2 (as illustrated in Figure 2). This enables a wearer to zoom in and out on a touch screen, using the edges of the thumb 5 and index finger 6 of the glove 1, as well as swipe, point, tap and perform other known actions on the touch screen using a more central part of the insert 12. If a seam 26, where the insert 12 was attached to the first material 10, or where the glove 1 was stitched 27 during manufacture was at an edge of the digit 2, halfway between an external side 30 and the palm side 31 of a digit 2, then this seam 26 would inhibit the use of the touch screen portion to zoom in and out as it is this part of your digit 2 with which a wearer would contact the touch screen when completing this action.

The insert 12 comprises a flange 13 extending in a direction perpendicular to an edge 14 of the insert 12, outwardly from a circumference of the insert 12. The flange 13 is also advantageously continuous along the whole of edge 14. The insert 12 is attached to the first material 10 by stitching the flange 13 to edges of the aperture 11 in the first material 10. Preferably the flange 13 has a thickness J greater than the thickness T of the U-shaped portion.

As illustrated in Figure 4, the insert 12 comprises a cuff 15 on its proximal end 16. The cuff 15 has a thickness K, which is greater than the thickness T of the U-shaped portion of the insert 12. The cuff extends away from a proximal end 16 of the insert 12 and towards the distal end 17 of the insert 12 by around 15% of the overall length of the insert 12. The cuff 15 also extends from the edge 14, to the edge 14 on the opposite side of the insert 12.

The term 'proximal' as used herein means towards a wearer's body, and the term 'distal' means in a direction away from a wearer's body. For example a wearer's elbow is proximal to their wrist, but distal to their shoulder.

As illustrated in Figure 5, in plan view the insert 12 has a footprint which is configured to comprise one linear edge 32, the proximal end 16 and one non-linear edge, curved edge 18.

With reference to Figures 3 to 6, dimensions of the insert 12 will now be provided by way of example. The thickness T of the U-shaped portion of insert 12 is between 0.02mm and 0.8mm, preferably between 0.05mm and 0.6mm, more preferably between 0.3 and 0.5mm. The thickness K of the cuff 15 is between 0.5mm and 1mm, preferably between 0.7mm and 0.9mm. The thickness J of the flange 13 is between 0.5mm and 1mm, preferably between 0.7mm and 0.9mm.

The length of the flange A is between 4mm and 8mm, preferably between 5mm and 7mm. The overall length of the insert B is between 20mm and 60mm, preferably between 30mm and 50mm. The height of the insert H is between 7mm and 20mm, preferably between 10mm and 16mm. The radius R of the insert 12 is between 5mm and 15mm, preferably between 7mm and 12mm.

In the case of a military pilot glove, the first material 10 may advantageously comprise a chemical and biological resistant protective material, for example a material impregnated with an adsorbent such as charcoal or any other known CBRN material. Alternatively the first material 10 may comprise a fire resistant material. Further examples of the first material 10 are described later.

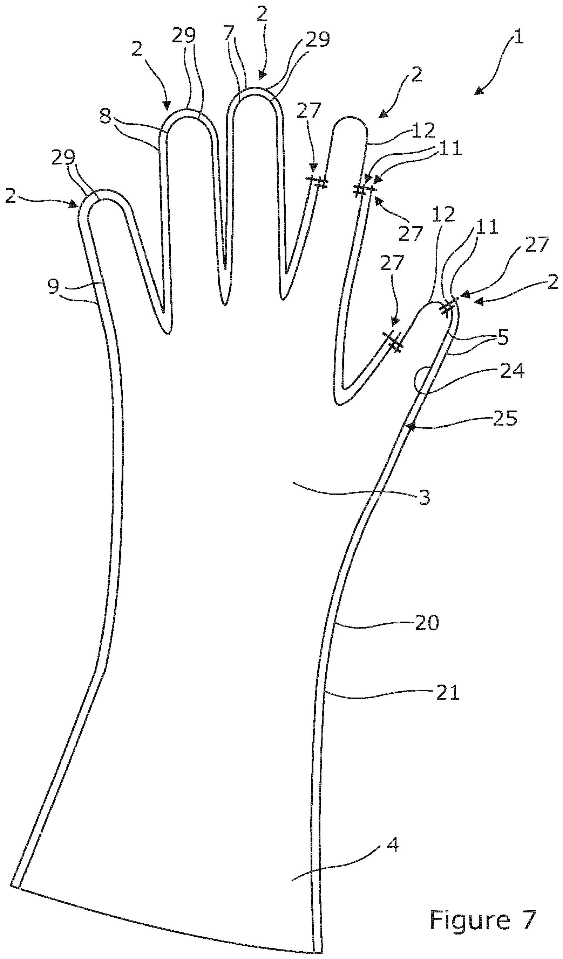

A glove 1 according to a second embodiment is described herein with reference to Figure 7. The glove 1 is substantially as described before and like features retain the same reference numerals. A difference in this embodiment is that the glove 1 further comprises an outer glove 20 made of a third material 21. Where an outer glove 20 is present, the glove 1 described in reference to the first embodiment can be referred to as an inner glove 24.

As illustrated in Figure 7, the third material 21 is absent in a region of the thumb digit 5 and index finger digit 7 of the outer glove 20 to define an aperture 11. The insert 12 is stitched 27 along the insert 12, preferably at the flange 13 (not shown) to both the first material 10 and the third material 21 in the region of the apertures 11. Therefore, at the insert 12, there is only one layer of the second material which is suitable for using a touch screen and due to the relatively low thickness, improves the sensitivity of a wearer's touch senses when actuating controls which are out of sight.

Furthermore, in the case of a military flying glove, the third material 21 may advantageously comprise a fire resistant material for example but not limited to Nomex (RTM) or Kevlar (RTM) and the first material 10 and insert 12 may advantageously comprise a chemical and biological resistant material. If it was the case that the outer glove 20 was attached to the insert 12, but the inner glove 24 merely comprised an aperture 11, then the wearer may not be adequately protected from chemical or biological agents. The chemical or biological agents present in the external environment could enter a space 25 between the outer glove 20 and the inner glove 24, travel to the aperture 11 and then into the inner glove 24. For this reason the insert 12 is advantageously attached to both the first material 10 and the third material 21.

An external environment is considered to be an environment outside of the glove 1.

In embodiments where the glove 1 comprises an inner glove 24 and an outer glove 20 and an insert 12 on the index finger digit 7, the method of assembling the glove 1 is as follows. An inner glove 24 is provided in which a portion of the first material 10 is absent in a region of the index finger digit 7 of the inner glove 24 to define an aperture 11, for example, a portion of the first material 10 maybe removed from the inner glove 24 to provide such aperture 11. The insert 12 is then stitched to the first material 10 in a region of the aperture 11. An outer glove 20 is then provided in which a portion of the third material 21 is absent in a region of the index finger digit 7 of the outer glove 20 to define an aperture 11, for example, a portion of the third material 21 maybe removed from the outer glove 20 to provide such aperture. The insert 12 is then stitched 27 to the third material 21 in a region of the aperture 11.

In an alternative to the second embodiment. The glove 1 is substantially as described before. A difference is that the outer glove 20 is made of the first material 10 and the inner glove 24 is made of the third material 21. The first material 10 may be for example a fire resistant material and the third material 21 may be for example a CBRN protective material. In this embodiment the glove 1 described in reference to the first embodiment can be referred to as an outer glove 20.

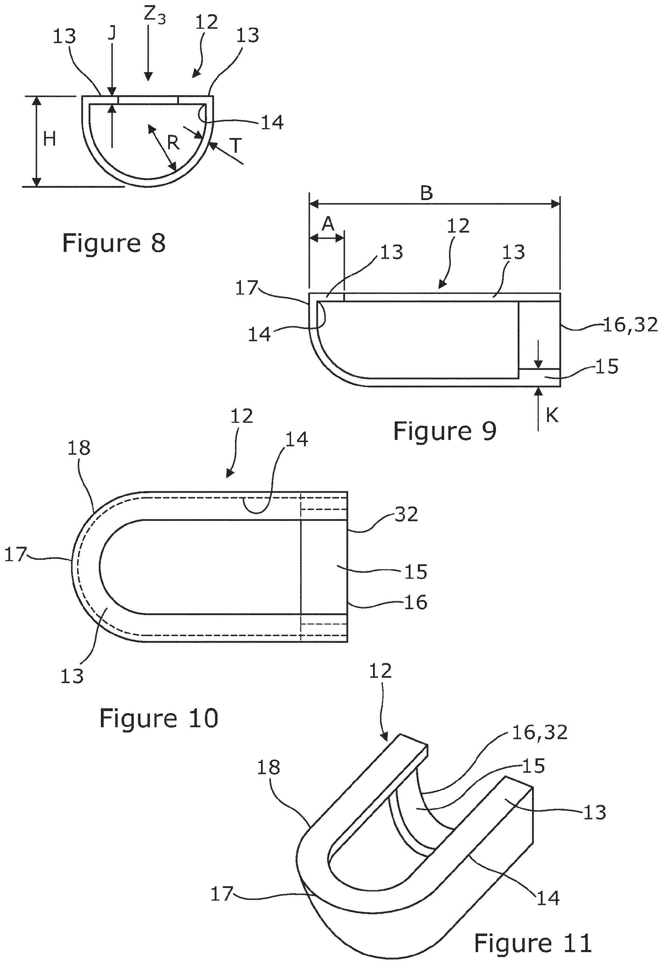

An insert 12 according to a third embodiment is described herein with reference to Figures 8 to 11. The glove 1 is substantially as described before and like features retain the same reference numerals. A difference in this embodiment is that the insert 12 comprises an inwardly protruding flange 13 and the cuff 15 is disposed on an internal face of the insert 12. The alternative insert 12 of the third embodiment may equally be used as an insert 12 in any glove 1 described herein, in place of the insert 12 with the outwardly-projecting flange 13.

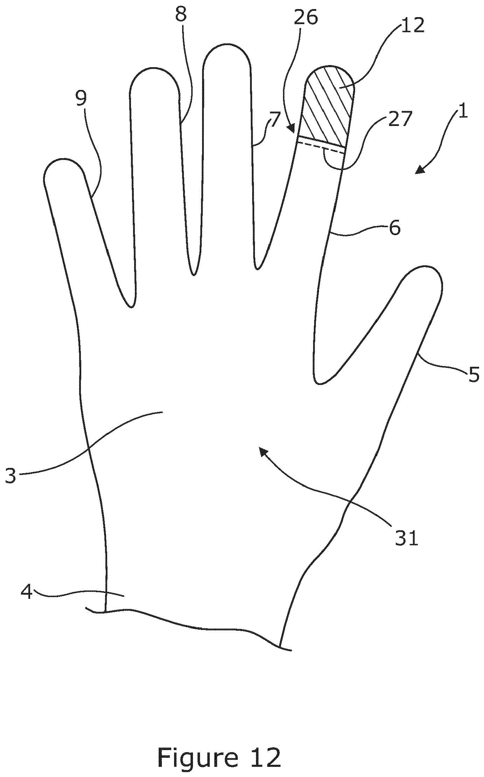

A glove 1 according to a fifth embodiment is described herein with reference to Figure 12. The glove 1 is substantially as described before and like features retain the same reference numerals. A difference in this embodiment is that only one digit 2, the index finger 6 comprises an insert 12.

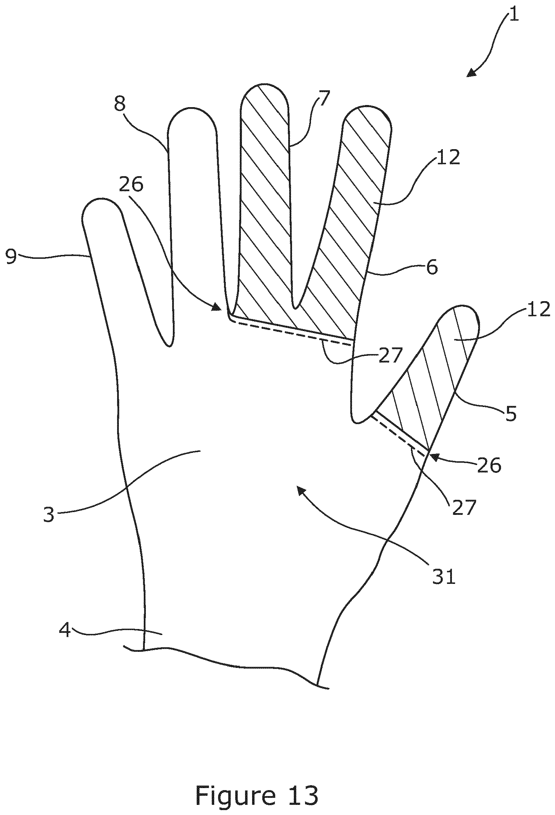

A glove 1 according to a fifth embodiment is described herein with reference to Figure 13. The glove 1 is substantially as described before and like features retain the same reference numerals. A difference in this embodiment is that the insert 12, extends over more than one digit 2. In the embodiment illustrated in Figure 13, the insert 12 extends over the index finger 6 and the middle finger 7. Also shown in this embodiment, although not essential and it also could be an alternative embodiment is an insert 12 which extends along more than 50% of the thumb digit 5.

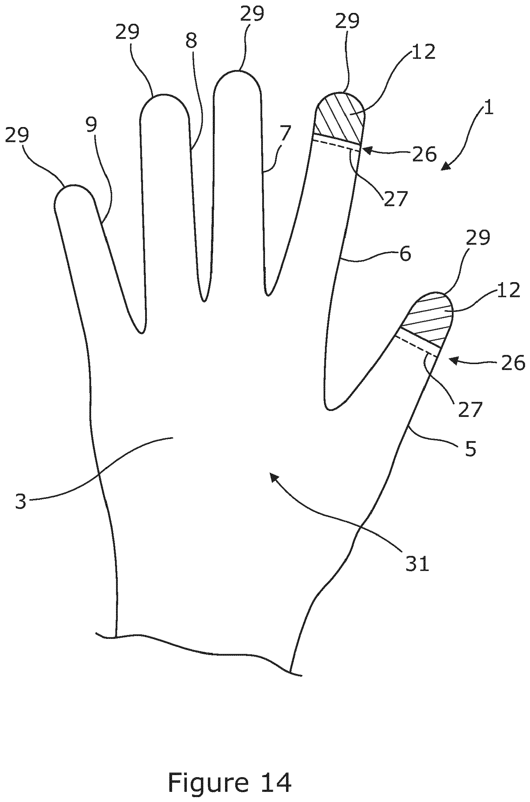

A glove 1 according to a sixth embodiment is described herein with reference to Figure 14. The glove 1 is substantially as described before and like features retain the same reference numerals. A difference in this embodiment is that the insert 12 extends over 100% of the tip 29 of the digits. This means that the insert 12 extends all the way around the fingerprint and a fingernail of the digit. In the embodiment illustrated in Figure 14, the insert 12 is disposed on the index finger digit 6 and the thumb digit 5.

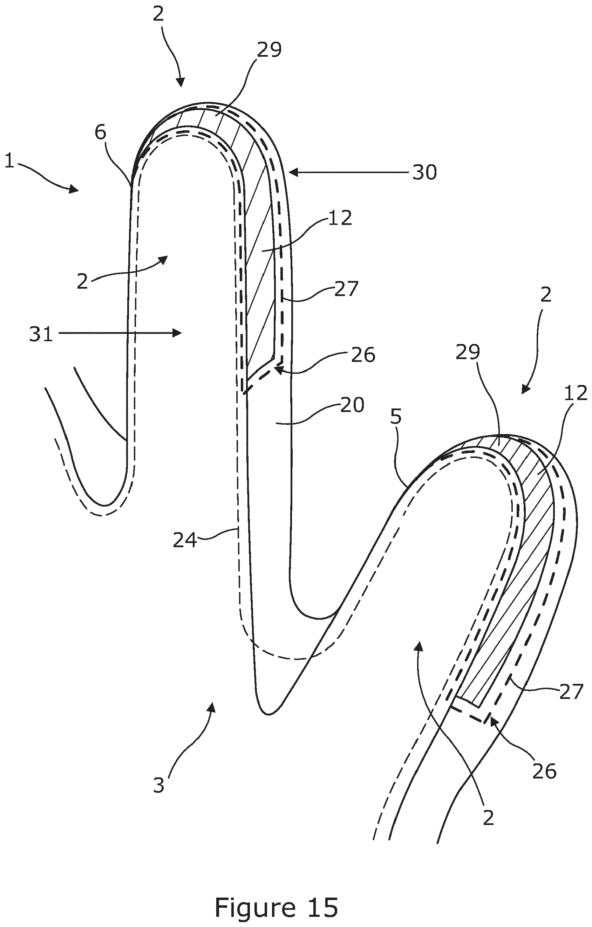

A glove 1 according to a seventh embodiment is described herein with reference to Figure 15. The glove 1 is substantially as described before and like features retain the same reference numerals. A difference in this embodiment is that the insert 12 is disposed in an aperture 11 along the tip 29 and edges of the digit 2. The seams 26 must be away from edges of the digit such that the stitching 27 or the seams 26 do not inhibit a wearer from using the sides of their fingers and thumb to zoom in or out on a touch screen. Preferably the inserts 12 are a single layer of the second material. Embodiments where the insert extends over more than 50% of the digit are preferable to this embodiment for the positioning of the seams, and also for the increased surface area over which touch sensitivity is improved for feeling controls which are out of a wearer's sight. In this embodiment only the edges of a wearer's digits 2 would benefit from the increased touch and feel sensitivity.

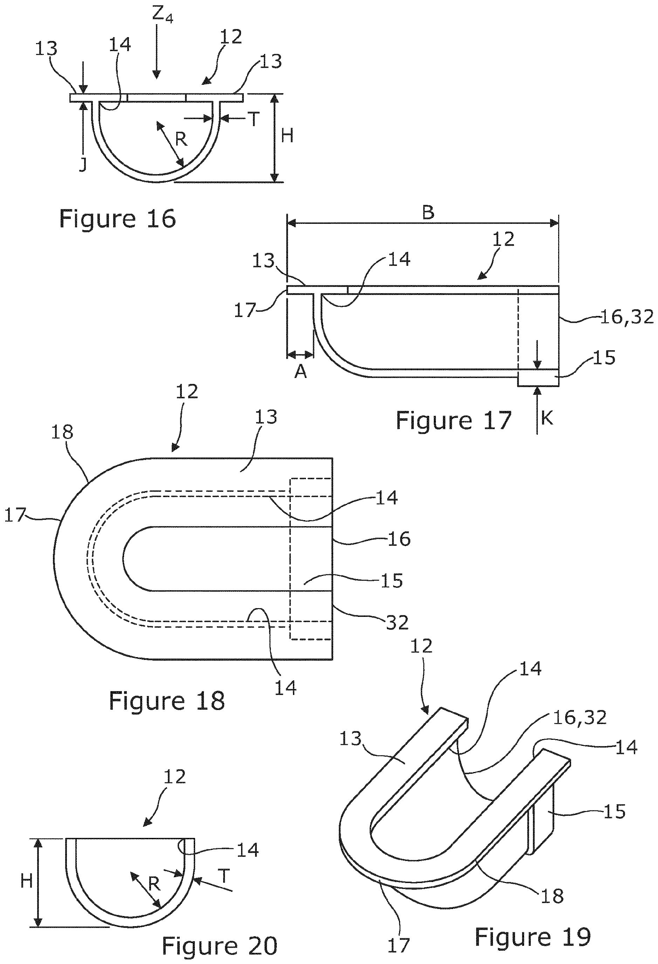

An insert 12 according to an eighth embodiment is described herein with reference to Figures 16 to 19. The glove 1 is substantially as described before and like features retain the same reference numerals. A difference in this embodiment is that the insert 12 comprises flange 13 which projects both inwardly and outwardly from the circumference of the insert. As illustrated the cuff 15 is disposed on an external face of the insert 12, however in some embodiments the cuff is disposed on an internal face of the insert, in other embodiments there is no cuff 15. The alternative insert 12 of the eighth embodiment may equally be used as an insert 12 in any glove 1 described herein.

An insert 12 according to a ninth embodiment is described herein with reference to Figure 20. The glove 1 is substantially as described before and like features retain the same reference numerals. A difference in this embodiment is that the insert 12 does not comprise a flange 13. The alternative insert 12 of the ninth embodiment may equally be used as an insert 12 in any glove 1 described herein.

Any of the above described embodiments can be a single layer glove 1 as described with reference to the first embodiment illustrated in Figure 1, or a double layer glove as described with reference to the second embodiment illustrated in Figure 7. In some embodiments the glove 1 comprises a further inner layer which can be for example to provide a more comfortable fit for a wearer. This can be made of a fourth material which is configured to be comfortable for a wearer to wear against their skin, or can provide padding to ensure a better fit of the glove 1. In some embodiments the insert 12 can be attached through three or more layers of material, depending on the configuration of the glove 1. In some embodiments the glove 1 comprises more than 3 layers.

In the above described embodiments the further inner layer or the inner glove 24 comprises an aperture 11 to which the insert 12 is stitched such that a multi-layer glove comprises a single layer at the insert 12 between a wearer's finger and an external environment. However in alternative embodiments intended within the present disclosure, the inner glove 24 or further inner layer does not comprise an aperture 11, such that there is a layer of the inner layer or glove 24 or the further inner layer, and a layer of the second material at the insert 12 between a wearer's finger and an external environment. In some embodiments the inner glove 24 would then be stitched to the outer glove 20 or outer layer. In some embodiments the inner glove 24 would be stitched to the outer glove 20 at the insert 12.

In an embodiment in which the inner glove 24 does not comprise an aperture 11, for example wherein an outer glove 20 is made of the first material 10 and an inner glove is made of the third material 21, a method of assembling the glove 1 is as follows. An outer glove 20 is provided in which a portion of the first material 10 is absent in a region of the index finger digit 7 of the outer glove 20 to define an aperture 11, for example, a portion of the first material 10 may be removed from the outer glove 20 to provide such an aperture 11. The insert 12 is then stitched to the first material 10 in a region of the aperture 11. An inner glove 24 is then attached inside the outer glove 20, preferably by stitching, although alternative known attachment means can be envisaged.

In the embodiments shown and described the glove 1 is a military pilot glove. However, in alternative embodiments the glove 1 is a simple flying glove 1 without the chemical and biological protection. In such cases the first material 10 can be a leather or heat resistant material, for example but not limited to Nomex (RTM). Alternatively the first material can be any other non-chemical and biological material.

In some embodiments the insert 12 is a moulded component.

In some embodiments at least one of the first material 10, the third material 21 and the fourth material are materials which permit body temperature to evaporate through them. This prevents excessive sweating of the wearer's hands within the glove 1. In some embodiments the first, second, third and fourth materials are all materials which permit body temperature to evaporate through them. In some embodiments the gloves 1 comprise panels of further materials, for example leather or alternative polymers, for reinforcement.

In some embodiments, for example those where the glove 1 is used for flying, the glove 1 is configured to sit tightly on a wearer's hand but so that it remains comfortable. This is so that there is limited relative movement of the glove 1 on the wearer's hand and improves the grip and contact of the controls when actuated by a user (wearer) wearing the glove 1. For these reasons, the glove 1 can come in a range of different sizes to ensure a close fit to a particular wearer. Alternatively it can include extendible panels (not shown), buckles and straps, or alternative known adjustment means to ensure a close fit between the glove 1 and the wearer's hand.

In the embodiments shown and described the glove 1 comprises an elongate sleeve 4 which extends over a portion of a wearer's forearm. However, in alternative embodiments the glove 1 extends only over the hand, or only over the hand and wrist of a wearer. In some embodiments the glove 1 is part of another garment.

It can be appreciated that in a larger glove 1, dimensions provided for the insert 12 could be slightly larger but proportionally similar. It can be appreciated that in a smaller glove 1 the dimensions provided for the insert 12 could be slightly smaller but proportionally similar. In some embodiments the insert 12 can extend the whole length of a digit 2, or any proportion between the tip and a base of a digit 2. In some embodiments the insert 12 can be a double insert, connected to the digit next to it. In some embodiments the insert 12 can extend over more than two digits. A base of the digit can be considered the point at which the finger or thumb meets the palm of the hand. In some embodiments the insert extends past the base of the digit.

In the embodiments shown and described the insert 12 extends over more than 50% of the circumference of the digit 2. Alternatively the insert 12 extends over more than 60% of the circumference of the digit 2. In other embodiments the insert 12 extends over more than 70% of the circumference of the digit 2. In some embodiments the insert 12 extends over between 60% to 90% of the digit 2, in some embodiments the insert extends over between 70% to 80% of the circumference of the digit 2. Alternatively in some embodiments the insert extends over the entire circumference of the digit 2, i.e. 100% of the circumference of the digit 2. It can be appreciated that the insert 12 may extend over less than 50% of the circumference of the digit 2, although advantageously the insert extending over more than 50% of the circumference of the digit enables both an edge and a fingerprint area of the digit 2 to be used to actuate the touch screen. Advantageously the insert 12 extending over more than 50% of the circumference of the digit 2 may be achieved by configurations other than where the height H of the insert 12 is greater than the radius R.

In the embodiments shown and described the filler is a nano carbon black filler, comprising a combination of carbon black filler and nano black filler. However in alternative embodiments intended within the present disclosure the filler can be another non-metallic filler, for example another carbon or graphite based filler. In some embodiments the non-metallic filler is a silicon based filler. In other embodiments the filler is a metallic filler or comprises metallic fibres or particles.

In the embodiments shown and described the base polymer for the second material is a butyl base polymer such as chlorobutyl. However in alternative embodiments intended within the present disclosure the base polymer can be for example a chloroprene, silicone or nitrile based polymer. It can be appreciated that alternative base polymers than those listed herein would be suitable for the second material, as long as they could be slid along a touch screen and were able to hold sufficient filler to be conductive to operate the touch screen.

In the embodiments shown and described the insert 12 comprises a flange 13 and/or a cuff 15. However in alternative embodiments intended within the present disclosure the insert 12 does not comprise a flange 13 and/or a cuff 15. In some embodiments the insert 12 is of a substantially continuous thickness across the entirety of the insert 12. In some embodiments the insert 12 is continuous such that there are no protrusions extending from the insert 12, for example but not limited to a flange 13 or a cuff 15.

In the embodiments shown and described the second material is an elastomer. However, in alternative embodiments intended within the present disclosure the second material may be an alternative polymer.

In the embodiments shown and described the insert 12 is attached to the first material 10, or the first material 10 and the third material 21 by stitching. However, in alternative embodiments the insert 12 can be attached by an adhesive, resin, by moulding the two materials together, soldering or any other known mechanical, chemical or other suitable attachment means.

In the embodiments shown and described the insert 12 is sewn at the flange 13 and cuff 15. However in embodiments in which there is no flange 13 or cuff 15, the insert 12 is stitched at its edges.

In the embodiments shown and described the insert 12 is attached directly to the first material 10, or the first material 10 and the third material 21. However, in alternative embodiments there may be at least one other material between the insert 12 and the first material 10, or the insert 12 and the third material 21, for example for reinforcement, or a better attachment.

In some of the embodiments described above the first material 10 is a chemical and biological resistant material. However in alternative embodiments at least one of the first material 10, second material, third material 21, or any further layer of the glove 1 is a chemical and biological resistant material.

In the embodiments described above where any material is described as a chemical and biological resistant material, it can be for example but not limited to, an impermeable rubber-coated canvas or other fabric, reinforced nylon with charcoal impregnated felt, or any alternative material with activated carbon/known adsorbent, or any other known material suitable for Chemical Biological Radiological Nuclear (CBRN).

In the embodiments shown and described the cuff 15 and the flange 13 are either both disposed on an internal surface 22 of the insert 12, or an external surface 23 of the insert 12. In alternative embodiments, one of the cuff 15 and the flange 13 is disposed on the internal surface 22 and the other of the cuff 15 and the flange 13 is disposed on the external surface of the insert 12. In some embodiments the insert 12 includes a cuff 15 or a flange 13. In some embodiments the insert 12 comprises neither a cuff 15 nor a flange 13 and the glove is attached directly to the U-shaped portion of the insert 12.

Where the term inwardly is used in respect of the flange 13, this can mean that the flange 13 extends towards a central plane of the insert 12. Where the term outwardly is used in respect of the flange 13, this can mean that the flange 13 extends away from a central plane of the insert 12.

In the embodiments shown and described the flange 13 is continuous along the whole of edge 14. However, in some embodiments the flange 13 is discontinuous along the edge 14, or differs in size along the edge 14 depending on the desired configuration of the seam 26 and glove 1. In the embodiments shown and described the flange 13 is described as extending perpendicularly from edge 14. However, in some embodiments the flange can extend at an acute, obtuse or reflex angle from edge 14. This can be advantageous to fit the insert 12 to the particular size of glove, or to better suit the material or number of layers the insert 12 must be stitched through.

In the embodiments shown and described the glove 1 comprises five digits 2. In alternative embodiments the glove is a mitten comprising only one finger receiving portion and a thumb receiving portion. It can also be appreciated that the glove 1 comprises two or three finger receiving portions. Each receiving portion can be considered a digit. In some embodiments all digits 2 comprise an insert 12, in some embodiments only one digit comprises an insert, preferably the index finger 6. In some embodiments between two and five digits comprise an insert 12.

In the above described embodiments, where reference is made to a particular digit, for example the thumb 5, index finger 6, middle finger 7, ring finger 8 and little finger 9, it can also be determined that the description applies to any other of the particular digits.

In the embodiments shown and described the first, second, third and fourth materials are described with reference to particular properties. It can be appreciated that each of these materials may provide alternative properties. For example, any of the materials may exhibit heat resistance, chemical and biological resistance, or comfort properties if suitable for the application of the gloves. The materials may also provide strength, aesthetic, liquid resistant, high friction, improved grip, medical suitability or any other alternative known properties for gloves. Particularly, any of the materials may provide any known properties for gloves suitable for use in Military, Police, Fire, Customs, Oil and Gas and Excise applications. The second material is always touch screen compatible.

In the embodiments shown and described any description relating to the first material 10, third material 21 and fourth material may be interchangeable. For example, the glove 1 may comprise an outer glove 20 or outer layer of the first material 10, and an inner layer of third material 21 or fourth material. In such an embodiment the third or fourth material can be for example a CBRN protective material and the first material 10 maybe a fire retardant material.

Where the glove 1 comprises more than one layer, at least one layer of the glove 1 comprises an aperture 11 to be covered by the insert 12. Any layer which comprises the aperture 11 may be referred to as comprising the first material 10. If only a single layer of the glove 1 comprises an aperture 11 then the layer that comprises the aperture 11 may be referred to as comprising the first material 10.

Furthermore, the glove of any previously described embodiment can also be used for Military, Police, Fire, Customs, Oil and Gas and Excise applications. Other applications can be envisaged for the glove 1, particularly any applications where PPE is required.

In the embodiments shown and described, at the region of the glove where the insert 12 is, there is only one layer of the second material. However, it can be appreciated that the insert 12 can comprise any number of thinner layers, which together comprise a thickness of between 0.02mm and 0.8mm and form the insert 12.

In the embodiments described above reference is made to particular materials, for example Nomex (RTM) and Kevlar (RTM). However, it can be appreciated that equivalent materials can also be used.

In the embodiments shown and described any insert 12 described above can be combined with any embodiment of glove 1 also described above. Any of the above described features can be combined to form an alternative embodiment.

It will be appreciated that various changes and modifications can be made to the present invention without departing from the scope of the present invention as defined by the claims.

## Claims

1. A glove (1) made of a first material (10), wherein a portion of the first material is absent in a region of at least one digit (5-9) of the glove to define an aperture (11) and at least a part of the aperture is disposed towards a tip of the at least one digit of the glove; and
a portion of a second material (12) is attached to the first material to cover the aperture;
wherein the second material is compatible for use with a touch screen; and
**characterized in that**
the portion of second material extends over between 50% and 90% of the circumference of the digit of the glove.

2. A glove (1) according to claim 1, wherein a seam (26) between the first material (10) and the second material (12) is disposed towards an external side of the glove.

3. A glove (1) according to claim 1 or claim 2, wherein the portion of second material (12) extends over more than one digit (5-9).

4. A glove (1) according to any of claims 1 to 3, wherein the portion of second material (12) has a thickness of 0.02 to 0.8mm.

5. A glove (1) according to any of claims 1 to 4, wherein the first material (10) comprises a chemical and biological protective material, suitable for military use.

6. A glove (1) according to any of claims 1 to 5, wherein the glove of the first material (10) comprises an inner glove (24), the glove further comprising an outer glove (20) made of a third material (21) surrounding the inner glove, wherein a portion of the third material is absent in a region of the same at least one digit (5-9) of the inner glove.

7. A glove (1) according to any of claims 1 to 6, wherein the glove of the first material (10) comprises an outer glove (20), the glove further comprising an inner glove (24) made of a third material (21), wherein the outer glove surrounds the inner glove.

8. A glove (1) according to claim 7, wherein a portion of the third material (21) is absent in a region of the same at least one digit (5-9) of the outer glove (20).

9. A glove (1) according to any of claims 6 to 8, wherein the portion of second material (12) is attached to both the first material (10) and the third material (21).

10. A glove (1) according to any of claims 1 to 9, wherein when worn by a wearer, the portion of second material (12) is the only material between a wearer's finger and/or thumb received within the at least one digit (5-9), and an external environment.

11. A glove (1) according to any of claims 1 to 10, wherein the second material (12) comprises an elastomer comprising a conductive filler.

12. A glove (1) according to claim 11, wherein the conductive filler is a non-metallic filler.

13. A method of assembling a glove (1) according to any of claims 1 to 12 comprising:
providing a glove with a portion of the first material (10) absent in a region of the at least one digit (5-9) of the glove to define the aperture (11); and
stitching the portion of second material (12) to attach it to the first material to cover the aperture.

## Patentansprüche

1. Handschuh (1), der aus einem ersten Material (10) hergestellt ist, wobei ein Abschnitt aus dem ersten Material in einem Bereich mindestens eines Fingers (5-9) des Handschuhs fehlt, um eine Öffnung (11) zu definieren, und mindestens ein Teil der Öffnung in Richtung einer Spitze des mindestens einen Fingers des Handschuhs angeordnet ist; und
ein Abschnitt aus einem zweiten Material (12) an dem ersten Material angebracht ist, um die Öffnung zu bedecken;
wobei das zweite Material mit einer Verwendung mit einem Touchscreen kompatibel ist; und
**dadurch gekennzeichnet, dass** sich der Abschnitt aus dem zweiten Material über zwischen 50 % und 90 % des Umfangs des Fingers des Handschuhs erstreckt.

2. Handschuh (1) nach Anspruch 1, wobei eine Naht (26) zwischen dem ersten Material (10) und dem zweiten Material (12) in Richtung einer äußeren Seite des Handschuhs angeordnet ist.

3. Handschuh (1) nach Anspruch 1 oder Anspruch 2, wobei sich der Abschnitt aus dem zweiten Material (12) über mehr als einen Finger (5-9) erstreckt.

4. Handschuh (1) nach einem der Ansprüche 1 bis 3, wobei der Abschnitt aus dem zweiten Material (12) eine Dicke von 0,02 bis 0,8 mm aufweist.

5. Handschuh (1) nach einem der Ansprüche 1 bis 4, wobei das erste Material (10) ein chemisches und biologisches Schutzmaterial umfasst, das für eine militärische Verwendung geeignet ist.

6. Handschuh (1) nach einem der Ansprüche 1 bis 5, wobei der Handschuh aus dem ersten Material (10) einen Innenhandschuh (24) umfasst, wobei der Handschuh ferner einen Außenhandschuh (20) umfasst, der aus einem dritten Material (21) hergestellt ist und den Innenhandschuh umgibt, wobei ein Abschnitt des dritten Materials in einem Bereich des gleichen mindestens einen Fingers (5-9) des Innenhandschuhs fehlt.

7. Handschuh (1) nach einem der Ansprüche 1 bis 6, wobei der Handschuh aus dem ersten Material (10) einen Außenhandschuh (20) umfasst, wobei der Handschuh ferner einen Innenhandschuh (24) umfasst, der aus einem dritten Material (21) hergestellt ist, wobei der Außenhandschuh den Innenhandschuh umgibt.

8. Handschuh (1) nach Anspruch 7, wobei ein Abschnitt des dritten Materials (21) in einem Bereich des gleichen mindestens einen Fingers (5-9) des Außenhandschuhs (20) fehlt.

9. Handschuh (1) nach einem der Ansprüche 6 bis 8, wobei der Abschnitt aus dem zweiten Material (12) sowohl an dem ersten Material (10) als auch an dem dritten Material (21) angebracht ist.

10. Handschuh (1) nach einem der Ansprüche 1 bis 9, wobei, wenn dieser von einem Träger getragen wird, der Abschnitt aus dem zweiten Material (12) das einzige Material zwischen einem Finger und/oder Daumen des Trägers, der innerhalb des mindestens einen Fingers (5-9) aufgenommen ist, und einer äußeren Umgebung ist.

11. Handschuh (1) nach einem der Ansprüche 1 bis 10, wobei das zweite Material (12) ein Elastomer umfasst, das einen leitfähigen Füllstoff umfasst.

12. Handschuh (1) nach Anspruch 11, wobei der leitfähige Füllstoff ein nichtmetallischer Füllstoff ist.

13. Verfahren zum Zusammensetzen einer Handschuhs (1) nach einem der Ansprüche 1 bis 12, umfassend:
Bereitstellen eines Handschuhs, wobei ein Abschnitt aus dem ersten Material (10) in einem Bereich des mindestens einen Fingers (5-9) des Handschuhs fehlt, um die Öffnung (11) zu definieren; und
Nähen des Abschnitts aus dem zweiten Material (12), um es an dem ersten Material anzubringen, um die Öffnung zu bedecken.

## Revendications

1. Gant (1) fait dans un premier matériau (10), dans lequel une partie du premier matériau est absente dans une région d'au moins un doigt (5 à 9) du gant pour définir une ouverture (11) et au moins une partie de l'ouverture est disposée vers une pointe de l'au moins un doigt du gant ; et
une partie d'un deuxième matériau (12) est fixée au premier matériau pour couvrir l'ouverture ;
dans lequel le deuxième matériau est compatible pour une utilisation avec un écran tactile ; et
**caractérisé en ce que**
la partie du deuxième matériau s'étend sur 50 % à 90 % de la circonférence du doigt du gant.

2. Gant (1) selon la revendication 1, dans lequel une couture (26) entre le premier matériau (10) et le deuxième matériau (12) est disposée vers un côté extérieur du gant.

3. Gant (1) selon la revendication 1 ou 2, dans lequel la partie du deuxième matériau (12) s'étend sur plus d'un doigt (5 à 9).

4. Gant (1) selon l'une quelconque des revendications 1 à 3, dans lequel la partie du deuxième matériau (12) a une épaisseur de 0,02 à 0,8mm.

5. Gant (1) selon l'une quelconque des revendications 1 à 4, dans lequel le premier matériau (10) comprend un matériau de protection chimique et biologique, adapté à un usage militaire.

6. Gant (1) selon l'une quelconque des revendications 1 à 5, dans lequel le gant du premier matériau (10) comprend un gant intérieur (24), le gant comprenant en outre un gant extérieur (20) fait d'un troisième matériau (21) entourant le gant intérieur, dans lequel une partie du troisième matériau est absente dans une région du même au moins un doigt (5 à 9) du gant intérieur.

7. Gant (1) selon l'une quelconque des revendications 1 à 6, dans lequel le gant du premier matériau (10) comprend un gant extérieur (20), le gant comprenant en outre un gant intérieur (24) fait d'un troisième matériau (21), dans lequel le gant extérieur entoure le gant intérieur.

8. Gant (1) selon la revendication 7, dans lequel une partie du troisième matériau (21) est absente dans une région du même au moins un doigt (5 à 9) du gant extérieur (20).

9. Gant (1) selon l'une quelconque des revendications 6 à 8, dans lequel la partie du deuxième matériau (12) est attachée à la fois au premier matériau (10) et au troisième matériau (21).

10. Gant (1) selon l'une quelconque des revendications 1 à 9, dans lequel, lorsqu'il est porté par un utilisateur, la partie du deuxième matériau (12) est le seul matériau entre le doigt et/ou le pouce d'un utilisateur reçu à l'intérieur de l'au moins un doigt (5 à 9) et un environnement externe.

11. Gant (1) selon l'une quelconque des revendications 1 à 10, dans lequel le deuxième matériau (12) comprend un élastomère constitué d'une charge conductrice.

12. Gant (1) selon la revendication 11, dans lequel la charge conductrice est une charge non métallique.

13. Procédé de montage d'un gant (1) selon l'une quelconque des revendications 1 à 12 comprenant :
la fourniture à un gant d'une partie du premier matériau (10) absente dans une région de l'au moins un doigt (5 à 9) du gant pour définir l'ouverture (11) ; et
la piqûre de la partie du deuxième matériau (12) pour la fixer au premier matériau pour couvrir l'ouverture.
